(19) Europäisches Patentamt
European Patent Office
Office européen des brevets

(11) Publication number: 0 462 525 A2

(12) EUROPEAN PATENT APPLICATION

(21) Application number: 91109814.3

(22) Date of filing: 14.06.91

(51) Int. Cl.5: C08L 67/02, //(C08L67/02, 29:14)

(30) Priority: 20.06.90 KR 909100

(43) Date of publication of application: 27.12.91 Bulletin 91/52

(84) Designated Contracting States: DE FR IT

(71) Applicant: CHEIL SYNTHETICS INC.
1, Chungsan-Dong
Kyungsan-city, Kyungsang buk-Do(KR)

(72) Inventor: Kim, Kwang tae, Hanbo Meedo Apartment 101-707
452 Daechi-Dong
Kangnam-Ku, Seoul(KR)
Inventor: Ihm, Dae Woo, Sangah Apartment 3-907
165 Ohkum-Dong
Songpa-Ku, Seoul(KR)
Inventor: Baek, Moon soo
1662-7, Sinlim 8-Dong
Kwanak-Ku, Seoul(KR)
Inventor: Lee, Young Choon, Jugong 3 cha Apartment 347-104
Banpo-Dong
Seocho-Ku, Seoul(KR)

(74) Representative: Hering, Hartmut, Dipl.-Ing.
Patentanwälte Berendt, Leyh & Hering
Innere-Wiener-Strasse 20
W-8000 München 80(DE)

# (54) Copolyester elastomer composition containing a vinylbutyral copolymer having excellent adhesion properties.

(57) A copolyester elastomer having superior adhesion properties produced by adding dicarboxylic acid containing terephthalic acid as an essential ingredient, a glycol containing 1,4-butane diol as an essential ingredient, a polyalkylene glycol having a molecular weight of 600-4,000 and 0.3 to 1.0 equivalents of one or more polyhydric alcohols having a valency of more than three as a branched chain forming agent, to 100 moles of terephthalic acid, respectively, wherein said copolyester elastomer comprises a polymer obtained by melt mixing 0.5-5.0 wt% of a polyvinylbutyral compound per 1 kg of copolyester elastomer containing 50-85 wt% of 1,4-butylene units. A copolyester elastomer produced by the present invention has appeared to have superior physical properties without having little effect on the resulting polymer and as well showed improved adhesion as compared with the conventional elastomer.

EP 0 462 525 A2

The present invention relates to copolyester elastomers having superior adhesion and more particularly to modified copolyester elastomers having improved adhesive properties than prior copolyester elastomers when molded to articles by a double injection molding process.

Random block copolymers obtained from dimethyl therephthalate or ester forming derivatives thereof, lower molecular glycols or ester forming derivatives thereof and polyalkylene glycols having a molecular weight of 800-4,000 exhibit desirable processibility, heat-resistance and low temperature characteristics and thus have been widely used in the production of shoe parts, automotive parts and electric products.

These molding articles are usually produced by injection molding or blow molding. For special purposes, for example, when the molded articles, particularly the shoe parts are designed to have a special shape, they should be molded by a double injection molding process. To this end, conventional methods involve varying the crystallization speed of the copolyester elastomer to be used in order to avoid phase separation of the interfaces or to avoid the crystallization of the copolyester elastomer. However, the former resulted in poor adhesion and the latter provided poor heat-resistance or weather resistance.

When surveying the additives having superior adhesion but small effects on the physical properties of the copolyester elastomer it was discovered that the melt mixing of a polybutyral resin and of the copolyester elastomer appeared to remarkably improve the adhesion. The present invention is based on these discoveries.

The invention will be described in more detail below.

The invention relates to a process for preparing copolyester elastomers which comprises melt mixing 0.1 - 5.0 wt% of a polyvinyl butyral compound and a polyhydric alcohol having a molecular weight of less than 500 per 1 kg of random block copolyester elastomer obtained from a dicarboxylic acid containing terephthalic acid as essential ingredient or an ester forming derivative thereof, a glycol containing 1,4-butanediol as essential ingredient and a polyalkylene glycol having a molecular weight of 600-4,000.

The available glycol compound of the copolyester elastomer is disclosed in US-A-4,013,624, for example, ethylene glycol, propylene glycol, tetramethylene glycol, hexamethylene glycol, neopentyl glycol and cyclohexane dimethanol can be used. It is more preferable to use tetramethylene glycol in the present invention.

Many kinds of polyester glycols have been used, but the present invention employs a polytetramethylene glycol in order to achieve the advantages of crystallization along with elasticity effects.

The polytetramethylene glycol having a molecular weight of 600-4,000 is preferred. Dispersibility depends on the composition rate of long chain ester units and short chain ester units or the molecular weight of a compound. For example, use of the higher molecular weight results in increase of dispersibility. On the other hand, in order to obtain high viscosity, it is preferable to use higher molecular weight. Accordingly, for better compatibility, the range of the molecular weight to be used is usually 800-2,000.

In one embodiment of the invention, the polyester elastomer should contain about 50-85 wt% of terephthalic acid and also 15-50 wt% of long chain ester units.

Also, the branch forming agents to he added for increasing the elastic recovery modulus and viscosity include phthalic acid and polyhydric alcohols, but it is preferred to use polyhydric alcohols in order to obtain the viscosity increasing effects and molecular weight increase. Representative examples of the polyhydric alcohols which can be used are those disclosed in US-A-4,013,624.

The present invention employs polyvinyl butyral compound having a structure represented by the following general formula and it is incorporated into the amount of 0.5-5.0 wt% per kg of copolyester elastomer, preferably 1-3.0 wt%:

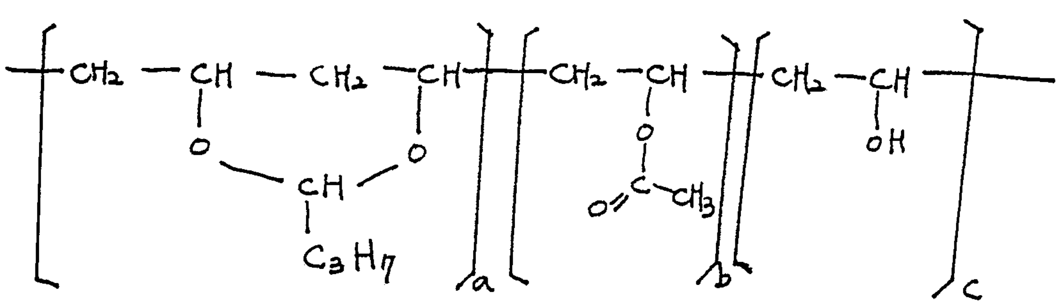

wherein, $a+b+c \geq 2000$ (a, b and c represent integers). The copolyester elastomer is usually obtained by a well known esterification process. First, terephthalic acid, an excess amount of butanediol and polyalkylene glycol are charged into the reactor at the same time. After stirring is continued for 5 minutes at 150 °C a

titanic acid compound as a catalyst is added to sharply increase the reaction temperature. When the reaction efflux is removed up to above 85%, the temperature should be adjusted not to exceed 200°C.

The polymerization time depend on the reaction temperature, catalyst and the amount of diols. In order to obtain a higher degree of polymerization a predetermined reaction temperature and stirrer are required. The most preferred polymerizing temperature is 200°C and more rapid stirring results in higher degree of polymerization.

The mixing method of copolyester polymer and polyvinylbutyral compound comprises premixing both of the compounds at ordinary temperature followed by heating and melt mixing. The melt mixing is carried out for a minute at the temperature higher than that of crystallizing melting point by about 30°C, in order to obtain homogeneous mixing. During the process, incorporation of antioxidants, heat-stabilizer and UV resistance agent as stabilizer appeared to have little effect on the present invention.

The physical properties of the compositions produced by the following examples were estimated as follows.

(1) Adhesion

The test piece having 6,35 mm (1/4 inches) of flexural strength was first molded by using conventional polymer through injection molding apparatus and then the molded test piece was cut to 1/2 of the original size. In the second molding, the resin composition obtained from the present invention was molded to produce the adhered test piece with 6,35 mm (1/4 inches) of flexural strength.

The test piece adhered by two kinds of resins was tested according to the KSM 3008 flexural strength testing method.

(2) Tensile Strength

A test piece was prepared according to the double injection molding process utilized in the adhesion test and was tested according to the KSM 3006 testing method.

(3) Hardness, Shore D

This test was carried out by using a shore D measurement and the KSM 3045 testing method.

The present invention will be described in more detail below with reference to Examples and Reference examples. However, the invention is not intended to be limited to these examples.

Examples 1 - 3

A flask equipped with a stirrer and a distillation tower is charged with the following starting materials.

dimethyl terephthalate ........................85 parts
1,4-butane diol................................63 parts
polytetramethylene glycol
(molecular weight 1,000).......................18 parts
glycerol.....................................0,15 parts
catalyst*.....................................1,7 parts
magnesium acetate.............................0,1 parts
antioxidant**.................................0,4 parts

* catalyst: In order to remove a small amount of solids contained in the tetrabutyl titanate, a mixture of 450 ml

of 1,4-butane diol anhydrides and 50g of tetrabutyl titanate was stirred under heating for 2-3 hours at 50°C. After a small amount of solids was completely eliminated, the resulting catalyst thus obtained is used in the preparation of copolyester polymer.

** antioxidant: N,N'-hexamethylenebis(3,5-di-t-butyl-4-hydroxyhydrocynal amide)

Esterification was conducted in the flask being maintained at a temperature of 150 ° C. After stirring for 5 minutes, the catalyst is added. Methanol was distilled from the reaction mixture as the temperature was abruptly raised to 200 ° C.

When the inner temperature of the flask reached 200 ° C so that no more methanol escaped, the temperature was slowly raised to 250 ° C and the pressure was gradually reduced to 0.1 mmHg within 30 minutes. The polymerization reactant was agitated at 250 ° C/0.1 mmHg for 50 minutes and then the vacuum was released to yield a viscous molten polymer from the flask in the presence of a nitrogen atmosphere.

Intrinsic viscosity of the resulting polymer was 1.14. 1.0 wt%, 2.0 wt% and 3.0 wt% polyvinyl butyral compounds having 2,200 of degree of polymerization per kg of polyester polymer were premixed with the copolyester polymer and then mixed with 0.1 wt% Irganox 1010 in a twin screw mixer being maintained at 240-250 ° C, to obtain 3-5 mm thick chips, respectively.

The resin compositions of the present invention was double-injection-molded to KSM 3006 and KSM 3008 specimens produced by copolyester polymers and the physical properties of the resulting polymer compositions were determined. The results are shown in Table 1 below.

Comparative Example 1

This example was essentially repeated with the same method as employed in Examples 1-3 except that a conventional ccpolyester was used instead of the two polymers for the double injection molding. The physical properties of the obtained polymers are shown in Table 1.

Comparative Example 2 -4

This example was essentially repeated with the same method as employed in Examples 1-3 except that the polybutyral compounds were added to an amount of 0.2 wt%, 6 wt% and 10 wt%, respectively. The physical properties of the obtained polymers are shown in Table 1.

Table 1

| | Examples | | | Comp. Examples | | | |
|---|---|---|---|---|---|---|---|
| | 1 | 2 | 3 | 1 | 2 | 3 | 4 |
| Tensile strength (at break, kg/cm²) | 390 | 410 | 400 | 10 | 110 | 300 | 270 |
| Elongation (at break, %) | 390 | 450 | 440 | 2 | 110 | 400 | 430 |
| Shore D Hardness | 55 | 55 | 55 | 55 | 55 | 55 | 55 |
| Flexural Elastic Modulus (kg/cm²) | 1950 | 2000 | 2010 | 120 | 600 | 1500 | 1200 |

It is evident from the results of the above Table 1 that the adhesive promotor had large effects on the resulting polymer. In the case of Examples 1-3, the mechanical properties were more improved by the increased addition of promotor. In Comparative Example 1, there was no evidence of effects to the physical properties. Comparative Examples 2-4 showed that the lower addition of the promotor resulted in the reduction of required adhesion and an excess amount of promotor resulted in reduced strength generally.

However, the additives appeared to have little effect on the change of the hardness.

Although preferred embodiments of the invention have been disclosed for illustrative purpose, those skilled in the art will appreciate that various modifications, additions and substitutions are possible, without departing from the scope and spirit of the invention disclosed.

**Claims**

A copolyester elastomer having superior adhesion properties which has been produced by adding a dicarboxylic acid containing terephthalic acid as an essential ingredient, a glycol containing 1,4-butane diol as an essential ingredient, a polyalkylene glycol having a molecular weight of 600-4,000 and 0.3 to 1.0 equivalents of polyhydric alcohols with a valency of more than three as a branched chain forming agent, to 100 moles of terephthalic acid, respectively, wherein said copolyester elastomer comprises a polymer obtained by melt mixing 0.5-5.0 wt% of a polyvinylbutyral compound being represented by the following general formula I per 1 kg of copolyester elastomer containing 50-85 wt% of 1,4-butylene units:

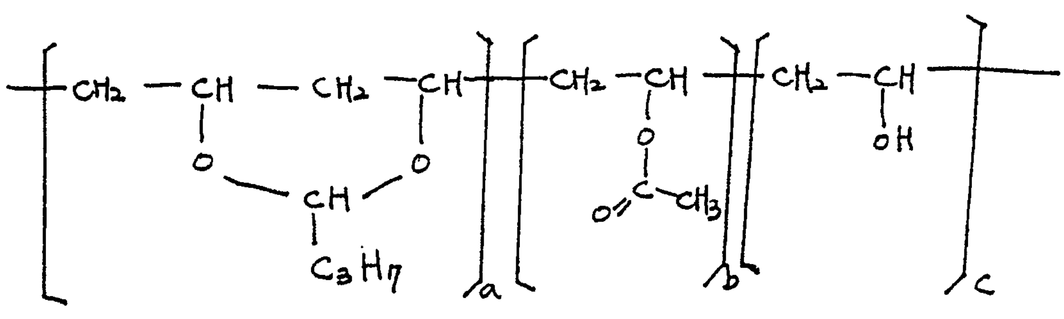

wherein $a+b+c \geq 2000$, a, b and c are integers.